# EUROPEAN PATENT APPLICATION

(11) **EP 4 560 713 A1**
(43) Date of publication of application: **28.05.2025**
(21) Application number: 24184415.8
(22) Date of filing: 25.06.2024
(51) Int. Cl.: H01M 4/04, H01M 4/13, H01M 4/139, H01M 4/62

(54) **SECONDARY BATTERY AND METHOD OF MANUFACTURING SECONDARY BATTERY**

(30) Priority: 24.11.2023 KR 20230165289
(71) Applicant: Samsung SDI Co., Ltd., Yongin-si, Gyeonggi-do 17084 (KR)
(72) Inventor: YUN, Jun Seo, 17084 Yongin-si (KR)
(74) Representative: Marks & Clerk LLP

(57) **Abstract**

A secondary battery includes an electrode plate substrate, a mixture portion on an outer side of the electrode plate substrate, the mixture portion being a coating including an active material, and a hydrophobic coating portion on the outer side of the electrode plate substrate, the hydrophobic coating portion being a coating layer including a hydrophobic material outside a boundary of the mixture portion, and a position of the mixture portion on the outer side of the electrode plate substrate being restricted by the hydrophobic coating portion.

## Description

### BACKGROUND

### 1. Field

The present disclosure relates to a secondary battery and a method of manufacturing the secondary battery.

### 2. Discussion of Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery may be used as a power source for driving a motor and a power storage battery in hybrid vehicles or electric vehicles. The secondary battery may include an electrode assembly having a positive electrode and a negative electrode, a case accommodating the electrode assembly, an electrode terminal connected to the electrode assembly, and the like.

The above-described information disclosed in the technology that serves as the background of the present disclosure is only for improving understanding of the background of the present disclosure and thus may include information that does not constitute the related art.

### SUMMARY

Aspects of embodiments provide a secondary battery, including an electrode plate substrate, a mixture portion on an outer side of the electrode plate substrate, the mixture portion being a coating including an active material, and a hydrophobic coating portion on the outer side of the electrode plate substrate, the hydrophobic coating portion being a coating layer including a hydrophobic material outside a boundary of the mixture portion, and a position of the mixture portion on the outer side of the electrode plate substrate being restricted by the hydrophobic coating portion.

The hydrophobic coating portion may be a band-shaped coating layer on each of opposite sides of the mixture portion in a width direction of the electrode plate substrate.

The hydrophobic coating portion may include a first material, the first material including at least one of nanosilica, fluorinated nanosilica, polyurethane, non-acetic silicone, and fluorocarbons.

The hydrophobic coating portion may further include a second material, the second material being an ethanol solvent.

The electrode plate substrate may be a negative electrode, and the mixture portion may include at least one of a conductive material, a binder, an additive, and the active material.

A thickness of the hydrophobic coating portion may be less than or equal to a thickness of the mixture portion.

The hydrophobic coating portion may be in direct contact with each of opposite sides of the mixture portion in a width direction of the electrode plate substrate.

Aspects of embodiments provide a method of manufacturing a secondary battery, including a supply operation of supplying an electrode plate substrate, a first coating operation of coating the electrode plate substrate with a hydrophobic coating portion including a hydrophobic material, and a second coating operation of coating a mixture portion including an active material on an outer side of the electrode plate substrate, after the first coating operation.

In an example, the method may further include a drying operation of drying the hydrophobic coating portion by operating a drying unit, after the first coating operation.

In an example, in the drying operation, a drying method of at least one of heat drying and ultraviolet drying may be included.

In an example, the method may further include a correction operation of correcting a coating shape of the hydrophobic coating portion, between the first coating operation and the drying operation.

In an example, in the first coating operation, a first material including at least one of nanosilica, fluorinated nanosilica, polyurethane, non-acetic silicone, and fluorocarbons may be used.

In an example, in the first coating operation, the first material may be made into a powder form, a slurry may be formed by mixing the first material and a second material used as a solvent, and the slurry may be coated on the electrode plate substrate.

In an example, in the first coating operation, an adhesive component may be applied onto the electrode plate substrate, and then the slurry may be coated on the electrode plate substrate.

In an example, in the first coating operation, a photo-sensitive adhesive component may be mixed with the slurry, and then the slurry may be coated on the electrode plate substrate.

At least some of the above and other features of the invention are set out in the claims.

### BRIEF DESCRIPTION OF DRAWINGS

Features will become apparent to those of skill in the art by describing in detail embodiments with reference to the attached drawings, in which:
FIG. 1 is a cross-sectional view illustrating a positive electrode, a negative electrode, and a separator of a secondary battery according to an embodiment of the present disclosure.
FIG. 2 is a front view illustrating an installation state of a coating module and a drying unit according to an embodiment of the present disclosure.
FIG. 3 is a perspective view illustrating the installation state of the coating module and the drying unit according to an embodiment of the present disclosure.
FIG. 4 is a plan view illustrating a state in which a hydrophobic coating portion and a mixture portion are formed on an electrode plate substrate according to an embodiment of the present disclosure.
FIGS. 5 to 7 are cross-sectional views each illustrating the state in which the hydrophobic coating portion and the mixture portion are formed on the electrode plate substrate according to an embodiment of the present disclosure.
FIG. 8 is a plan view illustrating a state in which the coating module and the drying unit according to an embodiment of the present disclosure are installed.
FIG. 9 is a plan view illustrating a state in which a guide unit is installed between the coating module and the drying unit according to an embodiment of the present disclosure.
FIG. 10 is a plan view illustrating a state in which the hydrophobic coating portion is aligned by the guide unit according to an embodiment of the present disclosure.
FIG. 11 is a perspective view illustrating a state in which a coating module according to another embodiment of the present disclosure is installed.
FIG. 12 is a perspective view illustrating a coating module according to another embodiment of the present disclosure.
FIG. 13 is a flowchart illustrating a method of manufacturing a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

In addition, the terms "comprise" or "include" and/or "comprising" or "including," when used in this specification, specify the presence of stated shapes, numbers, steps, operations, members, elements, and/or groups thereof, but do not preclude the presence or addition of one or more other shapes, numbers, steps, operations, members, elements, and/or groups thereof. When used to describe embodiments of the present disclosure, the terms "may," "could," and "may be" are intended to include one or more embodiments of the present disclosure.

When two objects of comparison are referred to as being the same, it means the two objects are "substantially the same." Thus, substantially the same may include a deviation that is considered low in the art, for example, a deviation of less than 5%. In addition, when a parameter is said to be uniform in a certain region, it may mean that the parameter is uniform from an average perspective.

Although "first," "second," and the like are used to describe various components, these components are of course not limited by these terms. These terms are only used to distinguish one component from other components, and unless otherwise stated, a first component could be termed a second component.

Throughout the specification, unless specifically stated otherwise, each component may be singular or plural.

When an arbitrary element is referred to as being "disposed above (or below)" or "disposed on (or under)" a component, it may mean not only that the arbitrary element is disposed in contact with an upper surface (or lower surface) of the component, but also that other elements may be interposed between the component and the arbitrary element disposed on (or under) the component.

Further, it should be noted that when a component is described as being "connected," or "coupled" to another component, those components may be directly connected or coupled to each other, but a third component may be interposed between each component, or each component may be connected or coupled to each other through the third component. In addition, when a part is said to be electrically connected to another part, this includes not only direct connections, but also connections with other elements disposed between the parts.

Throughout the specification, the phrase "A and/or B" means (A), (B), or (A and B), unless otherwise indicated. That is, the term "and/or," includes all combinations of one or more of the associated listed items. The term "C to D" means that C or more and D or less unless specifically stated otherwise.

Hereinafter, a secondary battery according to an embodiment of the present disclosure will be described with reference to the drawings.

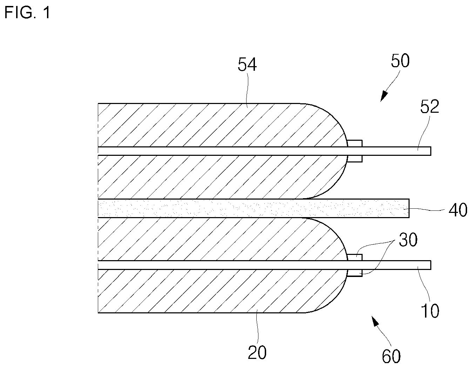

FIG. 1 is an enlarged, partial cross-sectional view of an electrode assembly of a secondary battery, according to an embodiment of the present disclosure. As illustrated in FIG. 1, the electrode assembly may include a positive electrode 50, a negative electrode 60, and a separator 40 between the positive electrode 50 and the negative electrode 60.

The secondary battery according to the present embodiment may include one or more electrode assemblies, each wound by interposing the separator 40, which is an insulator, between the positive electrode 50 and the negative electrode 60. The secondary battery may include a case in which the electrode assembly is inserted and a cap assembly coupled to an opening of the case. The secondary battery according to the present embodiment will be described by way of example with regard to a prismatic lithium-ion secondary battery. However, any suitable type of a secondary battery may be implemented, e.g., a lithium polymer battery or a cylindrical battery.

Referring to FIG. 1, each of the positive electrode 50 and the negative electrode 60 may include a coated portion (i.e., a region in which an active material is applied to a current collector formed of a thin metal foil) and an uncoated portion (i.e., a region not coated with the active material). In the present disclosure, the current collector of the negative electrode 60 may be referred to as an electrode plate substrate 10, and the coated portion of the negative electrode 60 may be referred to as a mixture portion 20.

For example, the positive electrode 50 and the negative electrode 60 may be wound after interposing the separator 40, which is an insulator, therebetween to form the electrode assembly. In another example, the electrode assembly may have a structure in which the positive electrode 50 and the negative electrode 60, each including a plurality of sheets, are alternately stacked with the separator 40 interposed therebetween.

The case may form an overall exterior of the secondary battery and may be formed of a conductive metal, e.g., aluminium, an aluminium alloy, or nickel-plated steel. In addition, the case may provide a space in which the electrode assembly is accommodated.

The cap assembly may include a cap plate covering an opening of the case, and the cap plate may be formed of a conductive material. Terminals of the positive electrode 50 and the negative electrode 60, which are electrically connected to the positive electrode 50 and the negative electrode 60, may be installed to protrude outwardly through the cap plate.

For example, an outer circumferential surface of an upper column of each of the terminals of the positive electrode 50 and the negative electrode 60 protruding to the outside of the cap plate may be screw-processed, and may be fixed to the cap plate with a nut. In another example, the terminals of the positive electrode 50 and the negative electrode 60 may have a rivet structure and may be riveted to the cap plate, or may be welded to the cap plate.

In addition, the cap plate may be formed of a thin plate and may be coupled to the opening of the case. In the cap plate, an electrolyte inlet, to which a sealing cap may be installed, may be formed, and a notched vent portion may be installed. In some examples, the vent portion may cover a vent hole provided in the cap plate. In some examples, the vent portion may be coupled or welded to a region surrounding the vent hole (e.g., a region of the cap plate).

As illustrated in FIG. 1, a hydrophobic coating portion 30 may be formed on the electrode plate substrate 10. For example, as illustrated in FIG. 1, the hydrophobic coating portion 30 may be formed along a periphery of the electrode plate substrate 10 (e.g., along a longitudinal direction of the electrode plate substrate 10) to define a boundary for the mixture portion 20 (e.g., along a width direction of the electrode plate substrate 10), such that an installation region of the mixture portion 20 of the negative electrode 60 may be located within a set region (e.g., widthwise direction of the electrode plate substrate 10). A same or similar hydrophobic coating portion may also be applied to the coated portion of the positive electrode 50.

The mixture portion 20, which is a coated portion of the negative electrode 60, may be a slurry having fluidity. In general, if the mixture portion is reduced in amount by abnormal process conditions and environment, the mixture portion of the negative electrode facing an end of the coated portion of the positive electrode may become small. Accordingly, surplus lithium ions (Li-ions) not accepted by the negative electrode during charging may form irreversible products to form an internal short circuit path with the positive electrode, thereby creating a risk of ignition. In contrast, according to embodiments, since the hydrophobic coating portion 30 is installed at a boundary of the mixture portion 20 to reduce the risk of ignition, a decrease in a mixture amount of the mixture portion 20 may be prevented or substantially reduced.

At least one of the electrode plate substrate 10 of the negative electrode 60 and a positive electrode substrate 52 of the positive electrode 50 may be coated with a mixture including an active material, a conductive material, a binder, and an additive. A negative electrode mixture forms the mixture portion 20, and a positive electrode mixture 54 is formed on the positive electrode substrate 52. The negative electrode mixture and the positive electrode mixture 54 may be coated by any suitable method, e.g., a slot die coating method.

The electrode plate substrate 10 according to an embodiment of the present disclosure is a current collector of the negative electrode 60, and the mixture portion 20 may include at least one of a conductive material, a binder, an additive, and an active material. The mixture portion 20 may be any suitable mixture including an active material that is coated on an outer side of the electrode plate substrate 10.

The mixture portion 20 may be a mixture slurry including a solvent and a powder. If the hydrophobic coating portion 30 is not installed at the boundary of the mixture portion 20, which is in a slurry state, an end portion of the mixture portion 20 may flow and spread (e.g., toward an outermost edge of the electrode plate substrate 10 in its width direction), thereby increasing a width of the end portion of the mixture portion 20 along the width of the electrode plate substrate 10. In order to prevent a shortage phenomenon of mixture application at the end of the mixture portion 20, the hydrophobic coating portion 30 is coated on the boundary of the mixture portion 20. For example, referring to FIG. 1, the hydrophobic coating portion 30 may be in direct contact with the mixture portion 20, such that the position of the hydrophobic coating portion 30 may determine or define the boundary of the mixture portion 20.

A slurry for the negative electrode 60 may include distilled water or water, and thus, has hydrophilicity. Thus, the hydrophobic coating portion 30 (which is or includes a hydrophobic material) may be applied to a position on the electrode plate substrate 10 to which the mixture portion 20 (which is a hydrophilic slurry for the negative electrode 60) is not coated or applied. If the hydrophobic coating portion 30 is applied to the electrode plate substrate 10 at the outside of the boundary of the mixture portion 20, immediately after the mixture portion 20 is coated, a resultant mixture slurry for the negative electrode 60 (i.e., the mixture portion 20) having flowability forms a high contact angle (e.g., a high oblique contact angle) at a coating edge portion. Since the mixture portion 20 having hydrophilicity is restricted from moving beyond the hydrophobic coating portion 30 by the hydrophobic coating portion 30, the phenomenon in which the thickness of the mixture portion 20 (e.g., as measured along a normal to the electrode plate substrate 10) is reduced may be minimized even at the end portion of the mixture portion 20.

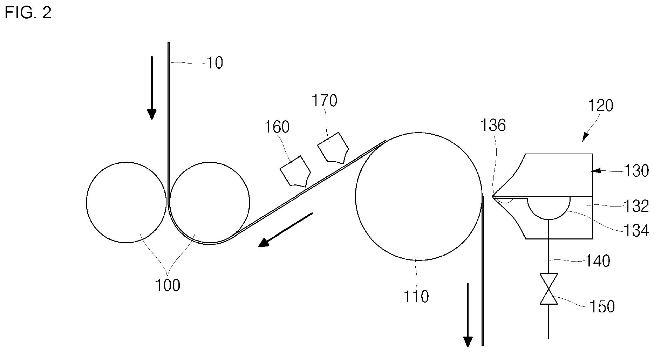

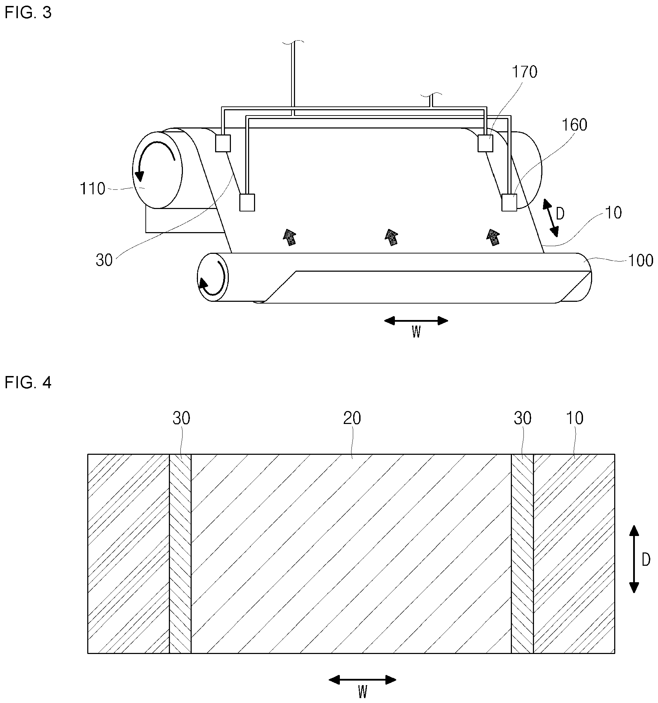

FIG. 2 is a front view illustrating an installation state of a coating module 160 (e.g., a coater) and a drying unit 170 (e.g., a dryer) according to an embodiment of the present disclosure. That is, FIG. 2 illustrates a side view of an arrangement of the coating module 160 and the drying unit 170 relative to the electrode plate substrate 10 and rollers. FIG. 3 is a perspective view illustrating the arrangement of the coating module 160 and the drying unit 170 according to an embodiment of the present disclosure.

As shown in FIGS. 2 and 3, the hydrophobic coating portion 30 may be modified in various ways within a technical idea of forming a coating layer including a hydrophobic material on the electrode plate substrate 10 outside the boundary of the mixture portion 20. For example, referring to FIG. 3, the position of the hydrophobic coating portions 30 at opposite edges of the electrode plate substrate 10 (i.e., at opposite edges along the width W of the electrode plate substrate 10 indicated by a horizontal arrow in FIG. 3) may be adjusted. Since the hydrophobic coating portions 30 are installed, a variation in width of the mixture portion 20 may be reduced (e.g., a spreading of the mixture portion 20 along the width W of the electrode plate substrate 10 beyond the hydrophobic coating portions 30 may be reduced). That is, a spreading phenomenon of the mixture portion 20 (which affects an increase in width of the mixture portion 20 or the dispersion of the mixture portion 20) may be reduced due to application of the hydrophobic coating portion 30 (which includes a hydrophobic material) to the negative electrode 60, which has been managed only by solid content and viscosity of the mixture slurry for the negative electrode 60, thereby increasing the width uniformity and improving dispersion of the mixture portion 20.

In the electrode plate substrate 10 of the negative electrode 60, the hydrophobic coating portion 30 may be coated or applied to the boundary of the mixture portion 20. For example, referring to FIG. 3, the hydrophobic coating portion 30 may be linearly applied onto the electrode plate substrate 10 in a moving direction or longitudinal direction D (e.g., the hydrophobic coating portion 30 may be continuously applied in parallel to an edge of the electrode plate substrate 10 along the longitudinal direction D of the electrode plate substrate 10). By installing the hydrophobic coating portion 30, it is possible to prevent or substantially minimize a phenomenon in which the amount of the mixture portion 20 is reduced while the mixture slurry for the negative electrode 60 having aqueous (hydrophilic) properties is spread out of a designed coating region.

For example, the mixture portion 20 may be coated after the hydrophobic coating portion 30 is coated. The hydrophobic coating portion 30 may form a band-shaped coating layer on each of both sides of the mixture portion 20 in a width direction W. The hydrophobic coating portion 30 may be coated or applied in a band shape extending in the longitudinal direction D of the electrode plate substrate 10. The longitudinal direction D of the electrode plate substrate 10 may be the same as the moving direction of the electrode plate substrate 10. The width direction W and the longitudinal direction D may form a right angle.

The hydrophobic material included in the hydrophobic coating portion 30 should have stable properties so as not to participate in an electrochemical reaction inside the secondary battery. The hydrophobic coating portion 30 according to an embodiment of the present disclosure may include a first material including at least one of nanosilica, fluorinated nanosilica, polyurethane, non-acetic silicone, and fluorocarbons.

The electrode plate substrate 10 of the negative electrode 60 may include Cu. In order to apply the hydrophobic coating portion 30 onto the electrode plate substrate 10, a pre-treatment, in which a hydrophobic material in a powder form is mixed with a solvent (e.g., ethanol) and is slurried, may be applied. In this case, a separate drying process may be added as the slurried hydrophobic material may adversely affect a coating quality of the slurry that is the mixture portion 20.

The application of the slurried hydrophobic material may be performed by a slot die method, which is the same method used for coating the slurried mixture portion 20. Referring to FIGS. 2-3, the coating module 160 may be configured to discharge the slurry only if the electrode plate substrate 10 is moved. Thus, the coating module 160 does not operate if the electrode plate substrate 10 stops moving, so excessive application of the hydrophobic material to the electrode plate substrate 10 may be prevented or substantially minimized.

The hydrophobic coating portion 30 according to an embodiment of the present disclosure may further include a second material. The second material may be a solvent to be mixed with the first material, e.g., the second material may include ethanol. The first material may include a hydrophobic material as described above, e.g., at least one of nanosilica, fluorinated nanosilica, polyurethane, non-acetic silicone, and fluorocarbons.

In order to form the mixture portion 20, the electrode plate substrate 10 may be coated with a slurry for the negative electrode 60. The slurry for the negative electrode 60 including a liquid may be solidified to form the mixture portion 20. The electrode plate substrate 10 may pass through a plurality of rollers to maintain a constant tension.

The electrode plate substrate 10 may be maintained in tension while passing through a first roller 100 having a pair of rollers, and then passing through a second roller 110 serving as a backup roll. The coating module 160 and the drying unit 170 may be installed between the first roller 100 and the second roller 110, e.g., the coating module 160 and the drying unit 170 may be adjacent to each other along the longitudinal direction D. The coating module 160 and the drying unit 170 may be installed at positions facing a moving path of the electrode plate substrate 10.

The hydrophobic material discharged from the coating module 160 may be applied and attached to the electrode plate substrate 10, thereby forming the hydrophobic coating portion 30. The hydrophobic material may be applied and attached while or before the electrode plate substrate 10 passes through the second roller 110 serving as a backup roll. The coating of the mixture portion 20 may be performed after coating an upper side surface of the electrode plate substrate 10 (based on FIG. 2) with a hydrophobic material. If both the upper side surface and a lower side surface of the electrode plate substrate 10 were to be simultaneously coated with the hydrophobic material and coated with the mixture slurry, contamination of a plurality of rollers while the electrode plate substrate 10 passes therethrough and deformation of the shape of the hydrophobic coating portion 30 could have occurred. Thus, only the upper side surface of the electrode plate substrate 10 that is not in direct contact with the rollers is first coated with the hydrophobic material and coated with the mixture slurry, followed by a subsequent process, in which an opposite side surface of the electrode plate substrate 10 is coated with the hydrophobic material and coated with the mixture slurry.

A mixture supply unit 120 (e.g., a mixture supplier) configured to discharge the mixture slurry may be installed on a side surface of the second roller 110 serving as a backup roll, e.g., the mixture supply unit 120 may be on a different side of the second roller 110 relative to the coating module 160 and the drying unit 170 (FIG. 2). The mixture supply unit 120 may be any suitable unit for supplying the mixture slurry to the electrode plate substrate 10 to form the mixture portion 20. As illustrated in FIG. 2, the mixture supply unit 120 according to an embodiment of the present disclosure may include a supply head 130, a connection conduit 140, and a control valve 150.

The supply head 130 may be installed at a position facing the second roller 110. The supply head 130 may supply the mixture slurry to an outer side surface of the electrode plate substrate 10 (i.e., to a same side surface already including the hydrophobic coating portion 30) moving along an outer side surface of the second roller 110. The supply head 130 according to an embodiment of the present disclosure may include a head body 132 installed at a position facing the second roller 110, and an inner tank 134 located inside the head body 132 and configured to store the mixture slurry received through the connection conduit 140. The supply head 130 may include an inner conduit 136 extending in a direction toward the second roller 110 from the inner tank 134. For example, as illustrated in FIG. 2, the inner tank 134 and the inner conduit 136 may be in fluid communication with each other, e.g., an outlet of the inner conduit 136 may face and overlap a central region of the electrode plate substrate 10 between the hydrophobic coating portions 30 at edges thereof.

The connection conduit 140 may extend into, e.g., into the interior of, the head body 132 and may be connected to the inner tank 134. The amount of mixture slurry passing through the connection conduit 140 may be adjusted by the operation of the control valve 150 connected to the connection conduit 140. The inner tank 134 forms a space for storing the mixture slurry inside the head body 132. The mixture slurry stored in the inner tank 134 may be moved through the inner conduit 136 communicating with the inner tank 134, and then, applied to the outer side of the electrode plate substrate 10.

The coating module 160 may be installed between the first roller 100 and the second roller 110, and may be installed above the electrode plate substrate 10 moving from the first roller 100 to the second roller 110. The coating module 160 may receive a hydrophobic slurry and apply the hydrophobic slurry onto an upper side (e.g., the outer side) of the electrode plate substrate 10 to form the hydrophobic coating portion 30. The configuration of the coating module 160 may be the same as that of the mixture supply unit 120.

The drying unit 170 may be installed at a position facing the electrode plate substrate 10 passing through the coating module 160 in order to dry the hydrophobic slurry discharged from the coating module 160. The drying unit 170 may dry the hydrophobic slurry, e.g., using at least one of heat drying and ultraviolet drying, to form the hydrophobic coating portion 30.

As illustrated in FIG. 3, the coating module 160 may be installed on each of both sides of the electrode plate substrate 10 in the width direction W, e.g., the coating module 160 may be installed to face and vertically overlap a peripheral edge of each of opposite sides of the electrode plate substrate 10 in the width direction W. The drying unit 170 may also be installed on each of both sides of the electrode plate substrate 10 in the width direction W, e.g., the drying unit 170 may be installed adjacently to the coating module 160 to face and vertically overlap a peripheral edge of each of opposite sides of the electrode plate substrate 10 in the width direction W. Based on the coating module 160, the drying unit 170 may be installed on a rear side of the electrode plate substrate 10 in the longitudinal direction D, e.g., the drying unit 170 may be between the coating module 160 and the second roller 110 in the longitudinal direction D. Thus, the slurry, which includes the hydrophobic material and is discharged from the coating module 160 to the electrode plate substrate 10, may be dried by the drying unit 170, so that the rollers in the post process may not be contaminated.

FIG. 4 is view illustrating a state in which the hydrophobic coating portion 30 and the mixture portion 20 are formed on the electrode plate substrate 10 according to an embodiment of the present disclosure. That is, FIG. 4 illustrates a plan view of a portion of the electrode plate substrate 10 with the hydrophobic coating portion 30 and the mixture portion 20 coated thereon.

As shown in FIG. 4, the band-shaped hydrophobic coating portion 30 extending in the longitudinal direction D may be coated (e.g., positioned) on each of both sides of the electrode plate substrate 10 in the width direction W. End portions of the hydrophobic coating portion 30 and the electrode plate substrate 10 may be spaced apart from each other in the width direction W by a set distance to form an uncoated portion.

The hydrophobic coating portion 30 may be installed (e.g., coated or deposited) on each of both sides of the mixture portion 20 in the width direction W. After first coating the hydrophobic coating portion 30, the mixture slurry for forming the mixture portion 20 may be applied onto the electrode plate substrate 10 between the two hydrophobic coating portions 30. For example, as illustrated in FIG. 4, the mixture portion 20 may be restricted (e.g., defined, blocked or enclosed) between the two hydrophobic coating portions 30. The mixture slurry having flowability may be installed only in a region set by the hydrophobic coating portion 30 (i.e., between the two hydrophobic coating portions 30).

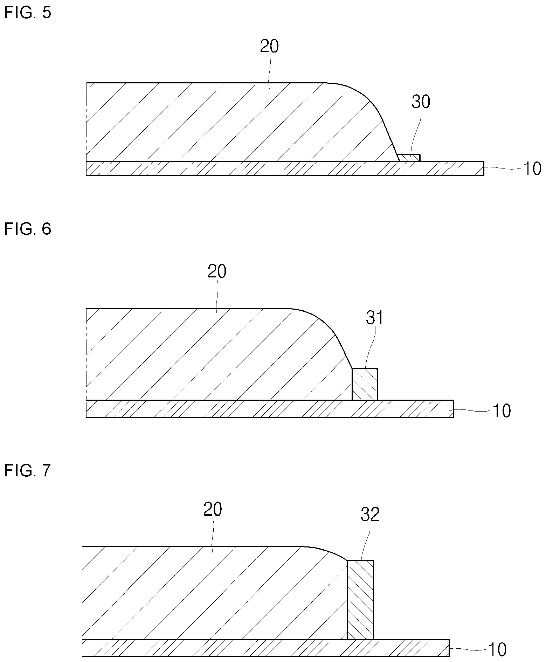

FIGS. 5 to 7 are cross-sectional views each illustrating the state in which the hydrophobic coating portion 30 and the mixture portion 20 are formed on the electrode plate substrate 10 according to an embodiment of the present disclosure.

As shown in FIG. 5, a shape and an end contact angle of a mixture slurry for the negative electrode 60 may be adjusted according to an application thickness or a coating thickness of the hydrophobic coating portion 30, so that an end portion contact angle and a shape of the mixture portion 20 may be adjusted. Since the shape of the mixture portion 20 may be controlled, charge/discharge performance of the secondary battery may be optimized.

The hydrophobic material used in the hydrophobic coating portion 30 has stability so as not to participate in an electrochemical reaction inside the secondary battery, so that the stability of the secondary battery may be maintained.

The application thickness of the hydrophobic coating portion 30 should be less than a coating height of the mixture slurry having flowability, and may have a level similar to a targeted height of the mixture portion 20 in a rolling process. If the hydrophobic coating portion 30 is applied to be thicker than the mixture slurry for the negative electrode 60, the hydrophobic coating portion 30 may be compressed by the rolling roller and may cover an upper side of the mixture portion 20, and thus, the charge/discharge performance may be reduced by interfering with the movement of lithium ions (Li-ions) if a charging and discharging operation is performed. The thickness of the hydrophobic coating portion 30 according to an embodiment of the present disclosure may be less than or equal to the thickness of the mixture portion 20.

Both end portions of the mixture portion 20 in the width direction W may be changed in shape according to the height of the hydrophobic coating portion 30. If the height of the hydrophobic coating portion 30 is 20% or less than the height of the mixture portion 20, a contact angle of the mixture portion 20 increases. The contact angle is an angle formed between an inclined surface of the end portion of the mixture portion 20 in the width direction W and the electrode plate substrate 10.

As shown in FIG. 6, if a height of a hydrophobic coating portion 31 increases, the contact angle of the mixture portion 20 is reduced. As shown in FIG. 7, if a height of a hydrophobic coating portion 32 increases to have a height slightly lower than the height of the mixture portion 20, the contact angle of the mixture portion 20 may be further reduced than the contact angle in FIG. 6. The shape of the mixture slurry at a coating edge portion of the electrode plate substrate 10 may be determined by the contact angle formed between the slurry and the electrode plate substrate 10.

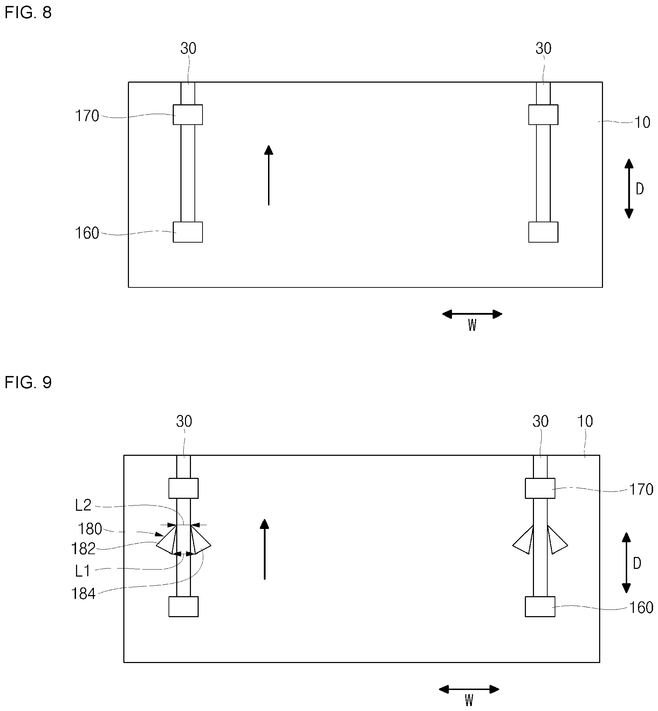

FIG. 8 is a plan view illustrating a state in which the coating module 160 and the drying unit 170 according to an embodiment of the present disclosure are installed. As shown in FIG. 8, the hydrophobic coating portion 30 may be dried by the drying unit 170 using at least one of heat drying and ultraviolet drying. If it is assumed that the electrode plate substrate 10 moves upward (based on FIG. 8) in the longitudinal direction D, the drying unit 170 may be installed above the coating module 160 in the longitudinal direction D.

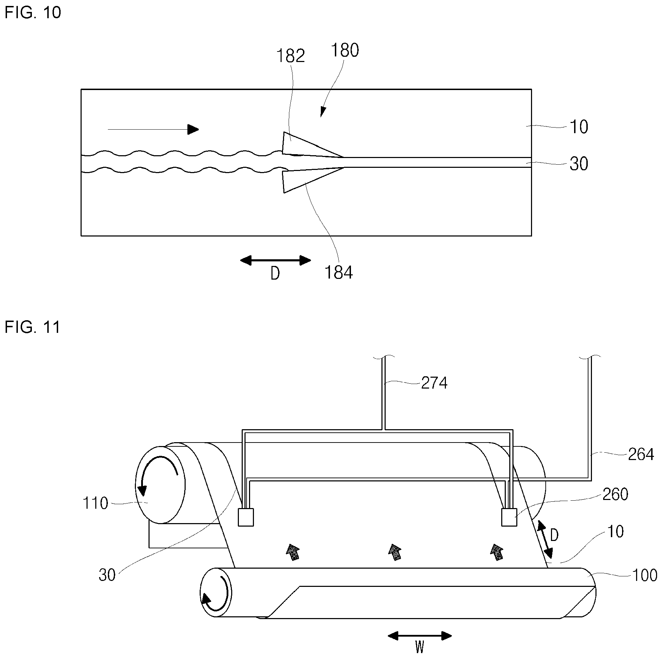

FIG. 9 is a plan view illustrating a state in which a guide unit 180 is installed between the coating module 160 and the drying unit 170 according to an embodiment of the present disclosure, and FIG. 10 is a plan view illustrating a state in which the hydrophobic coating portion 30 is aligned by the guide unit 180 according to an embodiment of the present disclosure. As shown in FIGS. 9 and 10, the hydrophobic slurry sprayed from the coating module 160 may potentially not be straight in shape. Thus, the guide unit 180 may be installed between the coating module 160 and the drying unit 170 and may correct the shape of the hydrophobic coating portion 30, e.g., may make the shape of the hydrophobic coating portion 30 linear. Installation of the guide unit 180 may improve uniformity of the hydrophobic coating portion 30 in a hydrophobic slurry applied onto an upper side of a substrate base of the negative electrode 60 or a hydrophobic material applied onto a photo-sensitive adhesive or adhesive component, thereby increasing clarity and precision of a boundary of the hydrophobic coating portion 30.

The guide unit 180 according to an embodiment of the present disclosure may include a first guide 182 installed on one side of the hydrophobic coating portion 30 facing the moving path in the width direction W, and a second guide 184 installed at a position facing the first guide 182 with the hydrophobic coating portion 30 interposed therebetween. The hydrophobic coating portion 30 may be located between the first and second guides 182 and 184, and an inlet and an outlet of the first and second guides 182 and 184 are installed to be spaced apart from each other. The guide unit 180 may be installed in a fixed state together with the coating module 160. In the first and second guides 182 and 184, an inlet width (length) L1 may be greater than an outlet width (length) L2. Since the inlet of the guide unit 180 is greater than the outlet in width, the hydrophobic coating portion 30 moving to the outlet of the guide unit 180 through the inlet of the guide unit 180 may be corrected in shape to a straight shape extending in the longitudinal direction D while having a width equal to the outlet width of the guide unit 180.

According to the present disclosure as described above, the installation of the hydrophobic coating portion 30 may prevent the spreading of the mixture portion 20, so that the mixture portion 20 may be uniformly installed, and the energy density may be improved. In addition, an insufficient amount of the mixture portion 20 at the boundary of the mixture portion 20 may be prevented or substantially minimized, thereby the charge/discharge performance of the secondary battery may be improved and productivity may be increased.

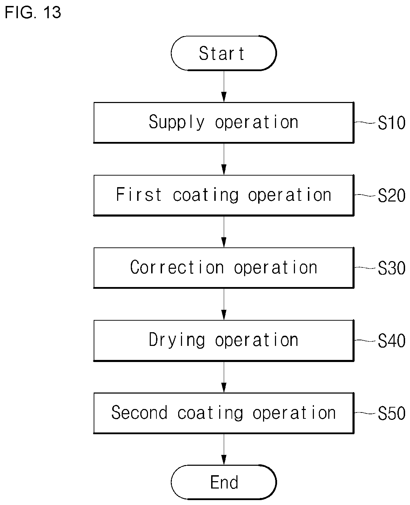

FIG. 13 is a flowchart illustrating a method of manufacturing a secondary battery according to an embodiment of the present disclosure. As shown in FIG. 13, a method of manufacturing a secondary battery according to an embodiment of the present disclosure may include a supply operation (S10) of supplying the electrode plate substrate 10. The electrode plate substrate 10 may be moved through the first roller 100 and the second roller 110.

After the supply operation, a first coating operation (S20) of coating the electrode plate substrate 10 with the hydrophobic coating portion 30 including a hydrophobic material may be performed. In the first coating operation (S20), a first material including at least one of nanosilica, fluorinated nanosilica, polyurethane, non-acetic silicone, and fluorocarbons may be used. In the first coating operation (S20), the first material may be made into a powder form and may then be mixed with a second material, which is used as a solvent to form a slurry, followed by application of the slurry onto the electrode plate substrate 10.

In the first coating operation (S20), the electrode plate substrate 10 may be coated with the slurry after applying an adhesive component onto the electrode plate substrate 10. A polymer adhesive, e.g., polyurethane, polyacrylate, epoxy resin, or the like, may be used as the adhesive.

In the first coating operation (S20), after mixing a photo-sensitive adhesive component into the slurry, the slurry may be applied to the electrode plate substrate 10. A polymer adhesive may be used as the photo-sensitive adhesive. In the application of the hydrophobic material, a photo-sensitive adhesive component may be applied onto the electrode plate substrate 10, and then, a hydrophobic material in a powder form may further be attached to the photo-sensitive adhesive component, thereby forming the hydrophobic coating portion 30. Alternatively, a hydrophobic material in a state in which a photo-sensitive adhesive component and a hydrophobic material in a powder form are mixed may be applied onto the electrode plate substrate 10 by a slot die method.

A correction operation (S30) of correcting a coating shape of the hydrophobic coating portion 30 may be further included between the first coating operation and a drying operation. The hydrophobic coating portion 30, which is discharged from the coating module 160 and applied onto the electrode plate substrate 10, may be corrected in shape while passing through the guide unit 180 including the first guide 182 and the second guide 184.

After the correction operation (S30), a drying operation (S40) of operating the drying unit 170 to dry the hydrophobic coating portion 30 may be further included. The drying operation (S40) may be performed by a drying method using at least one of heat drying and ultraviolet drying. The hydrophobic coating portion 30, which has passed through the guide unit 180 or has been applied by the coating module 160, may be dried while passing through the drying unit 170.

After the first coating operation (S20), a second coating operation (S50) of applying the mixture portion 20 including an active material onto an outer side of the electrode plate substrate 10 may be included. After the drying of the hydrophobic coating portion 30 is completed, a mixture slurry may be applied onto the electrode plate substrate 10 through the coating module 160 to form the mixture portion 20. A shape of an end portion of the mixture portion 20 may be controlled according to a height of the hydrophobic coating portion 30 without invading a region of the hydrophobic coating portion 30.

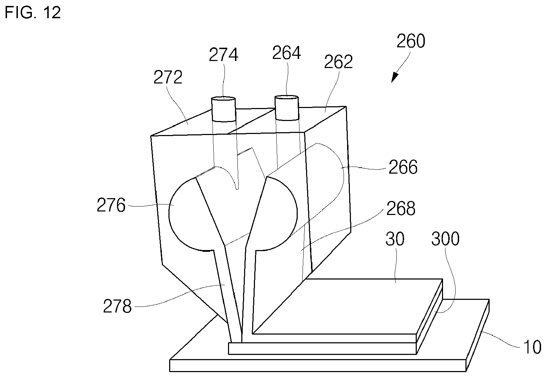

FIG. 11 is a perspective view illustrating a state in which a coating module 260 according to another embodiment of the present disclosure is installed, and FIG. 12 is an enlarged perspective view illustrating the coating module 260 according to the other embodiment of the present disclosure. As shown in FIGS. 11 and 12, the coating module 260 according to the other embodiment of the present disclosure may be variously modified within a technical idea of applying a hydrophobic slurry and a material of a photo-sensitive adhesive or adhesive component onto the electrode plate substrate 10. The coating module 260 according to the other embodiment of the present disclosure may include a first coating head 262, a first conduit 264, a first tank 266, a first spray nozzle 268, a second coating head 272, a second conduit 274, a second tank 276, and a second spray nozzle 278. A body of the coating module 260 includes the first coating head 262 and the second coating head 272.

The first tank 266 configured to store a hydrophobic slurry may be provided inside the first coating head 262. The hydrophobic slurry may be transmitted to the first tank 266 through the first conduit 264 connected to the first tank 266. The first spray nozzle 268 extending from the first tank 266 may extend from the first tank 266 to an outlet of the first coating head 262. Thus, the hydrophobic slurry moved from the first tank 266 to the first spray nozzle 268 is discharged toward the electrode plate substrate 10.

The second tank 276 configured to store a material of a photo-sensitive adhesive or adhesive component may be provided inside the second coating head 272 facing the first coating head 262. The material of the photo-sensitive adhesive or adhesive component may be transmitted to the second tank 276 through the second conduit 274 connected to the second tank 276. The second spray nozzle 278 extending from the second tank 276 may extend from the second tank 276 to an outlet of the second coating head 272. Thus, the material of the photo-sensitive adhesive or adhesive component moved from the second tank 276 to the second spray nozzle 278 may be discharged toward the electrode plate substrate 10.

An adhesive layer 300 may be formed by applying the material of the photo-sensitive adhesive or adhesive component onto the electrode plate substrate 10 through the second spray nozzle 278, and then the hydrophobic slurry may be applied onto the electrode plate substrate 10 through the first spray nozzle 268, thereby forming the hydrophobic coating portion 30. A polymer adhesive, e.g., polyurethane, polyacrylate, epoxy resin, or the like, may be used as the adhesive or photo-sensitive adhesive.

By way of summation and review, the present disclosure provides a secondary battery allowing a mixture applied to an electrode plate to be applied evenly, and a method of manufacturing the secondary battery. That is, according to the present disclosure, a mixture portion (i.e., a coating on a coated portion of a current collector of an electrode) may be prevented from spreading by installing a hydrophobic coating portion, so that the mixture portion may be uniformly installed and energy density may be improved. Further, an insufficient amount of the mixture portion at a boundary of the mixture portion may be prevented or substantially minimized, so that charge/discharge performance of a secondary battery may be improved and productivity may be increased.

However, the technical problem to be solved by the present disclosure is not limited to the above-described problem, and other problems which are not described will be clearly understood by those skilled in the art from the following description.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from scope of the present invention as set forth in the following claims.

Embodiments are set out in the following clauses:
Clause 1. A secondary battery comprising:
   an electrode plate substrate;
   a mixture portion formed by coating a mixture including an active material on an outer side of the electrode plate substrate; and
   a hydrophobic coating portion forming a coating layer including a hydrophobic material on the electrode plate substrate located outside a boundary of the mixture portion,
   wherein the mixture portion is coated after the hydrophobic coating portion is coated.
Clause 2. The secondary battery of clause 1, wherein the hydrophobic coating portion forms a band-shaped coating layer on each of both sides of the mixture portion in a width direction.
Clause 3. The secondary battery of clause 1 or clause 2, wherein the hydrophobic coating portion includes a first material including at least one of nanosilica, fluorinated nanosilica, polyurethane, non-acetic silicone, and fluorocarbons.
Clause 4. The secondary battery of clause 3, wherein the hydrophobic coating portion further includes a second material used as a solvent mixed with the first material and including ethanol.
Clause 5. The secondary battery of any one of clauses 1 to 4, wherein the electrode plate substrate is a negative electrode, and
   the mixture portion includes at least one of a conductive material, a binder, an additive, and the active material.
Clause 6. The secondary battery of any one of clauses 1 to 5, wherein a thickness of the hydrophobic coating portion is less than or equal to a thickness of the mixture portion.
Clause 7. The secondary battery of any one of clauses 1 to 6, wherein the hydrophobic coating portion is dried by a drying unit using at least one of heat drying and ultraviolet drying.
Clause 8. A method of manufacturing a secondary battery, the method comprising:
   a supply operation of supplying an electrode plate substrate;
   a first coating operation of coating the electrode plate substrate with a hydrophobic coating portion including a hydrophobic material; and
   a second coating operation of coating a mixture portion including an active material on an outer side of the electrode plate substrate, after the first coating operation.
Clause 9. The method of clause 8, further comprising a drying operation of drying the hydrophobic coating portion by operating a drying unit, after the first coating operation.
Clause 10. The method of clause 9, wherein in the drying operation, a drying method of at least one of heat drying and ultraviolet drying is included.
Clause 11. The method of clause 9 or clause 10, further comprising a correction operation of correcting a coating shape of the hydrophobic coating portion, between the first coating operation and the drying operation.
Clause 12. The method of any one of clauses 8 to 11, wherein in the first coating operation, a first material including at least one of nanosilica, fluorinated nanosilica, polyurethane, non-acetic silicone, and fluorocarbons is used.
Clause 13. The method of clause 12, wherein in the first coating operation,
   the first material is made into a powder form,
   a slurry is formed by mixing the first material and a second material used as a solvent, and
   the slurry is coated on the electrode plate substrate.
Clause 14. The method of clause 13, wherein in the first coating operation, an adhesive component is applied onto the electrode plate substrate, and the slurry is coated on the electrode plate substrate.
Clause 15. The method of clause 13, wherein in the first coating operation, a photo-sensitive adhesive component is mixed with the slurry, and the slurry is coated on the electrode plate substrate.

## Claims

1. A secondary battery, comprising:
an electrode plate substrate;
a mixture portion on an outer side of the electrode plate substrate, the mixture portion being a coating including an active material; and
a hydrophobic coating portion on the outer side of the electrode plate substrate, the hydrophobic coating portion being a coating layer including a hydrophobic material outside a boundary of the mixture portion, and a position of the mixture portion on the outer side of the electrode plate substrate being restricted by the hydrophobic coating portion.

2. The secondary battery as claimed in claim 1, wherein the hydrophobic coating portion is a band-shaped coating layer on each of opposite sides of the mixture portion in a width direction of the electrode plate substrate.

3. The secondary battery as claimed in claim 1 or claim 2, wherein the hydrophobic coating portion includes a first material, the first material including at least one of nanosilica, fluorinated nanosilica, polyurethane, non-acetic silicone, and fluorocarbons.

4. The secondary battery as claimed in claim 3, wherein the hydrophobic coating portion further includes a second material, the second material being an ethanol solvent.

5. The secondary battery as claimed in any one of claims 1 to 4, wherein:
the electrode plate substrate is a negative electrode, and
the mixture portion includes at least one of a conductive material, a binder, an additive, and the active material.

6. The secondary battery as claimed in any one of claims 1 to 5, wherein a thickness of the hydrophobic coating portion is less than or equal to a thickness of the mixture portion.

7. The secondary battery as claimed in any one of claims 1 to 6, wherein the hydrophobic coating portion is in direct contact with each of opposite sides of the mixture portion in a width direction of the electrode plate substrate.

8. A method of manufacturing a secondary battery, the method comprising:
a supply operation of supplying an electrode plate substrate;
a first coating operation of coating an outer side of the electrode plate substrate with a hydrophobic coating portion, the hydrophobic coating portion including a hydrophobic material; and
a second coating operation of coating a mixture portion on the outer side of the electrode plate substrate, the mixture portion including an active material, and the second coating operation being performed after the first coating operation.

9. The method as claimed in claim 8, further comprising a drying operation of drying the hydrophobic coating portion by operating a drying unit, after the first coating operation.

10. The method as claimed in claim 9, wherein the drying operation includes at least one of a heat drying and an ultraviolet drying.

11. The method as claimed in claim 9 or claim 10, further comprising a correction operation of correcting a shape of the hydrophobic coating portion, between the first coating operation and the drying operation.

12. The method as claimed in any one of claims 8 to 11, wherein in the first coating operation, a first material including at least one of nanosilica, fluorinated nanosilica, polyurethane, non-acetic silicone, and fluorocarbons is used.

13. The method as claimed in claim 12, wherein in the first coating operation:
the first material is made into a powder form,
a slurry is formed by mixing the first material and a second material used as a solvent, and
the slurry is coated on the electrode plate substrate.

14. The method as claimed in claim 13, wherein in the first coating operation:
an adhesive component is applied onto the electrode plate substrate, and
the slurry is coated on the electrode plate substrate.

15. The method as claimed in claim 13, wherein in the first coating operation:
a photo-sensitive adhesive component is mixed with the slurry, and
the slurry is coated on the electrode plate substrate.
